# EUROPEAN PATENT APPLICATION

(11) **EP 2 392 502 A2**
(43) Date of publication of application: **07.12.2011**
(21) Application number: 11168924.6
(22) Date of filing: 07.06.2011
(51) Int. Cl.: B62B 5/00

(54) **Drive unit for transport unit**

(30) Priority: 07.06.2010 DK 201070251
(71) Applicant: U-B-Let A/S, 7100 Vejle (DK)
(72) Inventor: Raun, Knud, 7100 Vejle (DK)
(74) Representative: Hussey, Paul Anthony

(57) **Abstract**

The invention relates to a drive unit (1) for tugging one or more transport units (3,4). The drive unit comprises a chassis (8) provided with a lower structure portion comprising one or more points of support for abutting against a supporting or carrying surface. The drive unit furthermore comprises a movable chassis portion (10), on which at least one power transferring wheel is comprised, and whereby an actuator is provided at least serving for vertical displacing of the drive wheel or drive wheels in relation to the chassis and the lower structure portion. Hereby a possibility for the parking of the drive unit on the mentioned points of support is attained, because the drive wheels are lifted up away from the supporting or carrying surface. By bringing the mentioned points of support in touch with the supporting or carrying surface, and thereby also the drive wheels, a situation is attained where the drive unit remains fixed positioned and braked due to the contact between the wheels and the supporting or carrying surface. In this situation the drive unit is ready for being coupled together with one or two transport units. Through the use of a drive unit according to the invention it is possible to tug two transport units such as goods transport means in shape of trolleys, trucks or carriages, cages with packages, linen trolleys and other types of somehow confined or closed transport units comprising wheels and where the use takes place in due relation to transportation of goods by lorries or in connection with the transportation or moving of goods around internally in a plant or within an institution.

## Description

The present invention relates to a drive unit, the employing of such a unit and a procedure for tugging one or more transport units on a supporting or carrying surface, whereby the mentioned transport units include one or more so called swivel or caster wheels, whereby the drive unit comprises at least one drive motor which is connected to at least one power transferring wheel, and whereby the drive unit comprises clutch means for the coupling together of the drive unit with one or more transport units comprising corresponding clutch means.

In general according to the state of the art, when transporting or removing goods, as by way of example by employing goods transport means such as in shape of trolleys, trucks or carriages, cages for packages or linen trolleys, etc., a great deal of muscle power is required to move these transport means. Such transport units are often provided with carrying wheels, of which one or two wheels are arranged as just simply straight forward oriented wheels, while the remaining of the wheels are present in type of swivel or caster wheels. Thus, when employing at least one single straight forward running wheel the orientation of the transport unit while running becomes more stable oriented as compared to the case, when all carrying wheels of the transport unit are being swivel wheels. By such transport units the steering of them thus does require a certain share of muscle power, where to add that pushing or pulling takes place manually.

At post offices, freight centres, hospitals and at many other places, such as within the industry, such transport units are being employed. Thus, certain obvious advantages are connected with these transport units, such as relating to that goods of unconventional sizes or goods with unconventionally shaped surfaces easily can be stored and transported in these transport units, i.e. without the implication of further auxiliary means, such as a palletizer or other unit which is capable of towing.

On the other hand a solution is wanted so that moving of these transport units can be carried out along as well short as long distances without using any essential muscle power. A possible solution to the problem is disclosed in US 4,884,936 according to which a palletizer carriage is fitted with mounting means which enable the coupling of the palletizer carriage unto a transport unit being provided with swivel wheels. This possible solution provides that moving of a transport unit can take place without using any essential amount of muscle power, on the other hand this solution provides only an adaptation of generally known equipment which requires the mounting in place of these mounting means before the possible solution is to be attained.

When the palletizer carriage has to be employed for other purposes it is first necessary to dismantle these mounting means. Thus, there exists an imminent risk for mounting errors and damaging the mounting means in case these means have not been removed before, by way of example, moving pallets. Furthermore, the palletizer carriage is large and clumsy and space is required around the palletizer carriage to enable a manoeuvring of it. A further drawback which is connected with this solution is that it does not permit moving of more than one transport unit at a time.

It is thus the purpose according to the invention to disclose a drive unit which is particularly suited to transport and remove transport units on wheels as, by way of example, transport cages, cages for packages, linen trolleys and similar transport units when the transport units are going to be transported over a short or a long distance, and where by employing a drive unit a high manoeuvrability and a possibility for transporting or removing the mentioned transport units without any essential use of muscle power is attained.

The invention relates according to the ingress above a drive unit for tugging one or more transport units and the use of such a drive unit and a procedure for tugging one or more transport units on a supporting or carrying surface. The drive unit according to the invention comprises a chassis provided with a lower structure portion which, at least to some extent, exhibits an extension over the supporting or carrying surface, and whereby the chassis comprises one or more points of support to abut against the mentioned supporting or carrying surface, and the drive unit further comprises a movable chassis portion on which the at least one power transferring wheel is provided, and a between the chassis and the movable chassis portion mounted actuator for, at least vertically, displacing of the drive wheel or drive wheels in relation to the chassis and the lower structure portion. Thus, by means of an actuator, which is mounted between the chassis and the movable chassis portion, a possibility is attained for the parking of the drive unit on the mentioned points of support, i.e. in that the drive wheel or the drive wheels, by means of a relative displacement between the chassis and the movable chassis portion, can be lifted up in direction away from the supporting or carrying surface. When occupying this lifted position in principle the drive unit occupies a parked position. By providing a mutual displacing of the chassis and of the movable chassis portion to such extent that the mentioned points of support are brought in touch with the supporting or carrying surface, and where also the power transferring wheels are brought in touch with the supporting or carrying surface, a situation is attained where the drive unit is brought to stand firmly and furthermore to be kept braked due to the wheel or the wheels having been brought in touch with the supporting or carrying surface. In this case the drive unit is made ready to be coupled together with one or with two transport units, because the drive unit occupies a, more or less, locked and fixed position.

Through the use of a drive unit according to the invention it is made possible to tug two transport units, such as goods transport means in shape of trolleys, trucks or carriages, cages for packages or linen trolleys or other types of somehow confined or closed transport units on wheels, whenever such a use is taking place in due relation to transportation of goods by lorries or in connection with the transportation and moving of goods around internally in a plant or within an institution.

A preferred procedure for the use of a drive unit according to the invention comprises that a tug unit and a transport unit are brought in contact with each other in such a manner that a lower structure portion which at least to some extent extends over the supporting or carrying surface is led in below a transport unit, and the actuator of the drive unit is activated to displace the chassis and the movable chassis portion, whereby the at least one drive wheel is brought to press against the supporting or carrying surface, and to lift the chassis including the lower structure portion(s) and thereby the coupling means to engage the corresponding coupling means on a transport unit. Furthermore it is to be mentioned, that the drive unit, when coupled to one or two transport units, is manually controlled, because these transport units are being rigidly coupled to the drive unit, whereby only a modest influencing is enough to enable a turning to take place about the power transferring wheel or wheels of the drive unit. As an option, the drive wheel or the drive wheels may, through a mechanic or electric differential gear, be connected with one or more driving motors which have the sole purpose to provide driving power to the fully coupled devices, which thus may be activated controlled by means of a control panel. Advantageously, such a control panel may be fitted at the end of a connecting cable which exhibits a suitable length and electrically is connected to the drive unit. A typical control unit comprises means for the control of the direction of driving and of the speed and also includes suitable means for the control of the above mentioned activator. These as last mentioned means may though be arranged on the drive unit itself as to secure the presence of necessary local attention while a drive unit is being coupled together with one or two transport units.

As a preferred further embodiment according to the invention a drive unit for tugging one or more transport units may be thus embodied that the chassis of the drive unit at two opposing sides is provided at each with a lower structure portion, where both of these structures portions are provided with one or more points of support to abut against the supporting or carrying surface. Through the presence of the two lower structure portions the advantage is attained that the drive unit itself is able to be parked in a stable manner, i.e. stable without the risk of a side tipping is taking place.

As a particularly preferred embodiment according to the invention the points of support of the drive unit advantageously may be swivel wheels, thereby, when the drive wheel or the drive wheels are lifted up away from the supporting or carrying surface, it becomes possible to provide a manually moving of the transport unit through displacing the chassis and the movable portion of the chassis in relation to each other.

As a further embodiment according to the invention of a drive unit for tugging one or more transport units the coupling means, which are arranged on the lower structure portion of the chassis, may advantageously exhibit a vertically oriented direction for the coupling together. Hereby it becomes possible to couple the drive unit together with a transport unit simply by positioning the drive unit in such a manner in front of the transport unit that the lower structure portion of the drive unit is extending in below the corresponding coupling means comprised on the transport unit or the transport units, i.e. the last mentioned being the case when the drive unit has been placed in between two transport units. To perform the coupling together of the units the chassis to achieve this is displaced in such a direction in relation to the movable chassis portion, so that the power transferring wheel or wheels is/are pressed down against the supporting or carrying surface, and in sequence then permits the coupling means to be brought into mutual contact and furthermore hereby preferably lifts the transport units a little bit up away from the supporting or carrying surface. Hereby the in orientation in straight-forward direction running wheels, if present, are put out of operation and increased steering ability becomes attained.

As a preferred further embodiment according to the invention the movable chassis portion, which comprises the drive wheel(s) of the drive unit, may comprise further coupling means in shape of fixing means which from the movable chassis portion are positioned as extending in the same direction as the lower structure portion. These fixing means may advantageously serve to secure that the above mentioned coupling means remain coupled together during transport on an uneven supporting or carrying surface, but, may on the other hand also serve to provide an improving influence on the rigidity which is attained whenever the drive unit stays coupled together with one or two transport units. Relating to the rigidity, which in common is attained through the coupling together of the units, the higher the degree of strength of this rigidity is the more easy it correspondingly becomes to manoeuvre the complete transport system.

As a preferred embodiment of the drive unit according to the invention the above mentioned actuator serving at least to provide the vertical displacing of the drive wheel(s) in relation to the chassis and the lower structure portion may advantageously be an electric driven actuator, preferably a linear actuator. Other suitable types of actuators can also be employed, such as pneumatic and hydraulic actuators. In equivalent manner a gas spring or other kind of mechanical and manually controllable solution also can be employed.

The above mentioned drive motor on the drive unit may also advantageously be an electric motor which is supplied with energy from an accumulator battery which is comprised on the drive unit. As a preferred embodiment according to the invention two accumulator batteries may be comprised on the chassis, i.e. with one on either side of the movable chassis.

One of the accumulator batteries may advantageously serve as an extra accumulator battery which either is fully charged or is going to be charged. Hereby, an accumulator system is provided which comprises a kind of spare resource. Advantageously, an electric plug connection facility may be located at the accumulator batteries or elsewhere on the drive unit providing facility for connecting a charging unit which can charge the accumulator batteries. Connecting of the charging facility may be manually established or alternatively be activated in automatic manner, i.e. by just moving the drive unit into a charging station.

It is obvious that anybody skilled in the art when having understood the principal features according to the invention is able to provide variations of embodiments which as such are not specifically described within the present specification, but nevertheless embody variations which do form part of the invention as being based upon the same basic idea as the described various embodiments and as being claimed through the attached claims.

The invention is as follows described in more details by reference to the drawing, in which:
Fig. 1 illustrates by way of example a drive unit placed between two transport units,
fig. 2 illustrates a drive unit whereby one transport unit is shown in position and a further transport unit is shown partly in position over the coupling means,
fig. 3 illustrates a drive unit coupled together with two transport units,
fig. 4 illustrates a drive unit whereby on the chassis a lower structure portion is provided comprising supporting or carrying wheel and coupling means,
fig. 5 illustrates a drive unit as viewed downwards along one side of the chassis and the movable chassis portion.

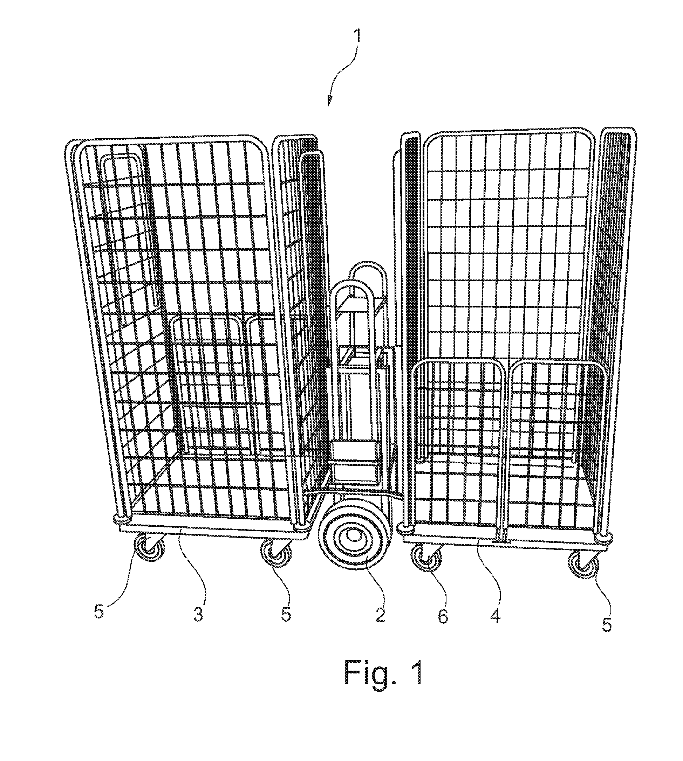

In Fig. 1 of the drawing by way of example a drive unit 1 is illustrated which is occupying a parked position by which the drive wheels 2 are lifted up, but, positioned in place between two transport units 3 and 4. The illustrated transport units are transport cages which are provided with three swivel wheels 5 with one at each of three corners and comprising one in direction straight forward oriented wheel 6 which is shown provided at the last corner. The illustrated drive unit 1 may be about 1 meter in height while the transport units 3 and 4 may exhibit about 2 meters in height.

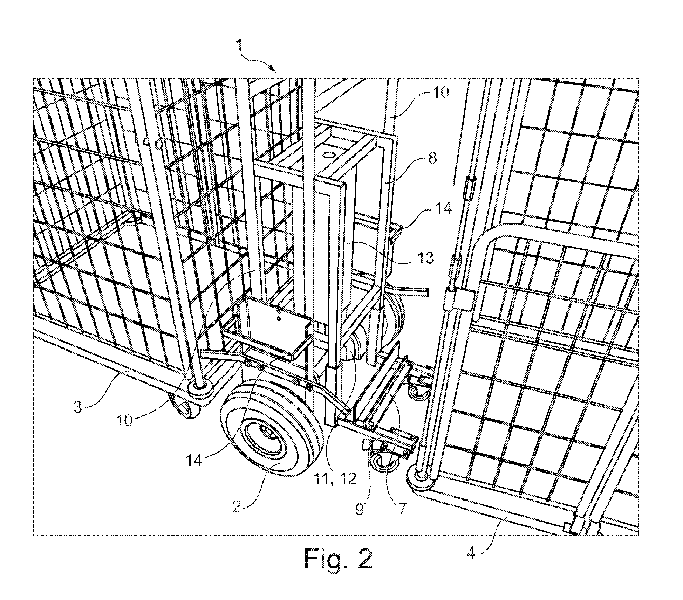

In Fig. 2 of the drawing a drive unit 1 is illustrated comprising two power transferring wheels 2 and a transport unit 3 placed in position and a further transport unit 4 illustrated as only partly in position over coupling means 7. The coupling means 7 are provided on a chassis 8 and arranged in direct contact with a lower structure portion 9 which extends over the supporting or carrying surface - which in the illustrated case is a floor. Furthermore, a movable chassis portion 10 is illustrated unto which the power transferring wheels 2 are mounted while implying a shaft 11 and an electric motor 12. The movable chassis portion 10 is provided displaceable in vertical direction in relation to the chassis 8 by means of an actuator 13 by means of which the wheels 2 and respectively the lower structure portion 9 and the chassis 8 can be lifted up and down i relation to the supporting or carrying surface. On the respective sides of the movable chassis portion 10 are illustrated holding means 14, shown as clamps, which serve to hold or to just store batteries or accumulator batteries which serve to supply energy to the sliding/displacing moving of the movable chassis 10 in relation to the chassis 8 as well as to provide driving power for the drive wheels 2 and thereby to the moving of the transport units 3, 4.

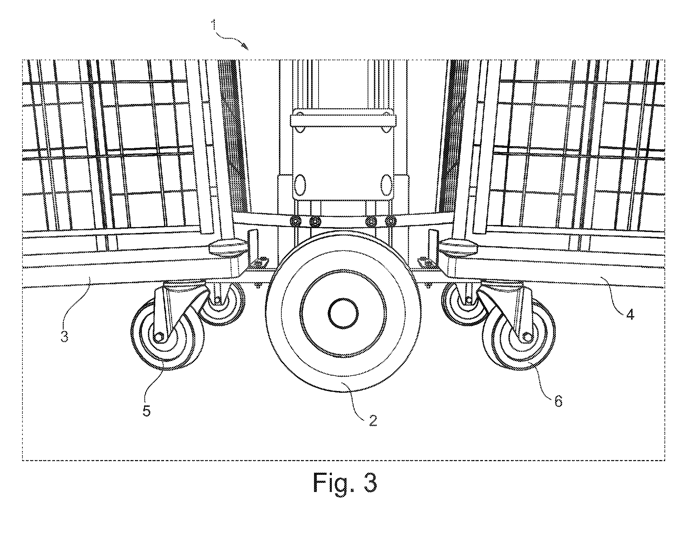

In Fig. 3 of the drawing a drive unit 1, which is coupled together with two transport units 3 and 4, is illustrated. At the position being illustrated the wheels 5, 6 on the transport units 3, 4 are lifted up from the supporting or carrying surface and the together coupled vehicle is ready to be moved by activating not illustrated control means.

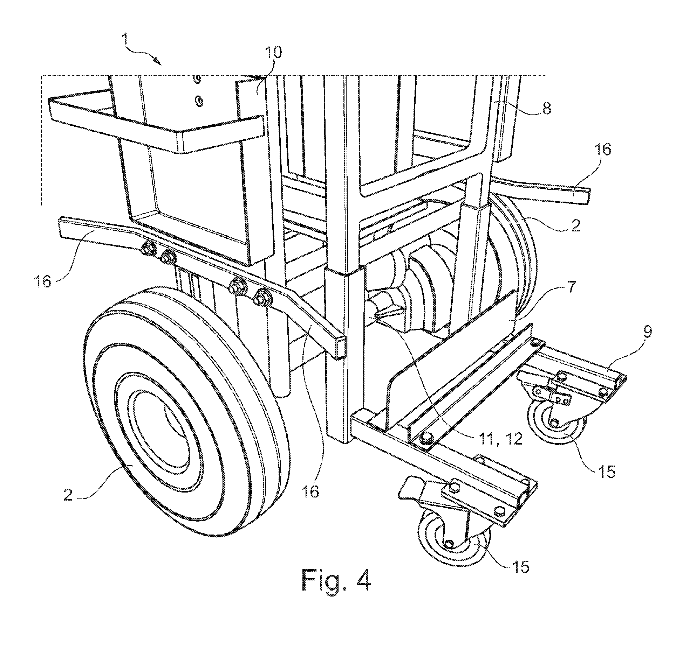

In Fig. 4 of the drawing a drive unit 1 is illustrated which on the chassis 8 as illustrated comprises a lower structure portion 9 comprising points of support 15 of the swivel wheel type and includes coupling means 7 serving for a coupling with a not illustrated transport unit. With the drive unit 1 out of use and simultaneously with the power transferring wheels 2 being lifted up from the supporting or carrying surface the drive unit 1 can be moved without using the power transferring wheels 2 because a similar arrangement as the illustrated is present on the other side of the drive unit 1. Through the use of the swivel wheels as points of support 15 it is possible easily and in a simple manner to move the drive unit 1 in all directions. On the movable chassis portion 10 drive wheels 2 are provided, as illustrated, including further coupling means 16 in shape of protruding finger means 16 which extend from the movable chassis portion 10 and in the same direction as the lower structure portion 9. These protruding fingers 16 serve to engage with means on the transport units 3 and 4, so that the transport units 1 through activating the actuator 13 are becoming fixed positioned between these fingers 16 and the above mentioned coupling means 7.

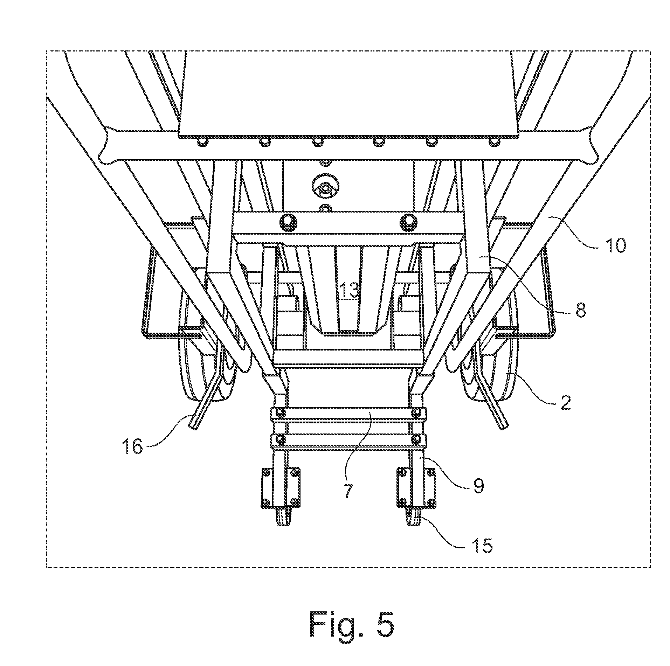

In Fig. 5 of the drawing a drive unit 1 is illustrated as viewed in direction down along one side of the chassis 8 and the movable chassis portion 10. At the supporting or carrying surface power transferring wheels 2 and one of the protruding lower structure portions 9 of the chassis 8 are illustrated. It is also illustrated how the movable chassis portion 10 is extending upwards and provides an outer frame which can serve as a handle when the drive unit 1 is employed.

## Claims

1. Drive unit (1) for tugging one or more transport units (3, 4) on a supporting or carrying surface, whereby the mentioned transport units (3, 4) comprise one or more swivel wheels (5), whereby the drive unit (1) comprises at least one drive motor (12) connected with at least one power transferring wheel (2), whereby the drive unit (1) comprises coupling means (7) for the coupling together of one or more transport units (3, 4) which comprise corresponding coupling means, **characterized in that** the drive unit (1) comprises a chassis (8) provided with a lower structure portion (9) comprising one or more points of support (15) for abutting against the mentioned supporting or carrying surface, where by the drive unit (1) furthermore comprises a movable chassis portion (10), and whereby an actuator (13) is mounted between the chassis (8) and the movable chassis portion (10), **characterized in that** the at least one drive wheel (2) is provided on the movable chassis portion (10), and whereby the mentioned actuator (13) is provided for providing the at least vertical displacing of the drive wheel or drive wheels (2) in relation to the chassis (8) and the lower structure portion (9).

2. Drive unit (1) for tugging one or more transport units (3, 4) according to claim 1, **characterized in that** the chassis (8) of the drive unit on two opposing sides comprises a lower structure portion (9), and whereby both of these lower structure portions (9) comprise one or more points of support (15) for abutting against the supporting or carrying surface.

3. Drive unit (1) for tugging one or more transport units (3, 4) according to claim 1 or 2, **characterized in that** the points of support (15) of the drive unit are provided as swivel wheels.

4. Drive unit (1) for tugging one or more transport units (3, 4) according to claim 1, 2 or 3, **characterized in that** t the at the lower structure portion (9) of the chassis provided couplings means (7) comprise a coupling together being performed in vertical direction.

5. Drive unit (1) for tugging one or more transport units (3, 4) according to claim 1, 2, 3 or 4, **characterized in that** the movable chassis portion (10) which comprises the drive wheels (2) of the drive unit furthermore comprises coupling means (16) in shape of fixing means which extend from the movable chassis portion (10) and in the same direction as the lower structure portion (9).

6. Drive unit (1) for tugging one or more transport units (3, 4) according to claim 1, 2, 3, 4, or 5, **characterized in that** the the mentioned actuator (13) serving at least for the vertical displacing of the drive wheels (2) in relation to the chassis (8) and the lower structure portion (9) is an electric driven actuator, preferably a linear actuator.

7. Drive unit (1) for tugging one or more transport units (3, 4) according to claim 1, 2, 3, 4, 5 or 6, **characterized in that** the mentioned at least one drive motor (2) on the drive unit (1) is an electric motor.

8. Drive unit (1) for tugging one or more transport units (3, 4) according to claim 1, 2, 3, 4, 5, 6 or 7, **characterized in that** the drive unit (1) comprises a control panel comprising means to control the mentioned at least one drive motor (2) and/or actuator (13).

9. Use of a drive unit (1) for tugging one or more transport units (3, 4) according to claim 1, 2, 3, 4, 5, 6, 7 or 8, **characterized in that** the tugging unit (1) is used to remove or transport transport units (3, 4) such as goods transport means in shape of trolleys, trucks or carriages, cages with packages, linen trolleys and other types of somehow confined or closed transport units comprising wheels (5, 6) and where the use takes place in due relation to transportation of goods by lorries or in connection with the transportation or moving of goods around internally in a plant or within an institution.

10. Procedure to use a drive unit (1) for tugging of one or more transport units (3, 4) according to any one of the claims 1 through 9, **characterized in :**
- **that** a tugging unit (1) and a transport unit (3, 4) are brought in contact with each other in such a manner that a lower structure portion (9) which at least to some extent extends over the supporting or carrying surface is moved in below a transport unit (3, 4),
- **that** the actuator (13) of the drive unit is activated to displace the chassis (8) and the movable chassis portion (10), whereby the at least one power transferring wheel (2) is pressed against the supporting or carrying surface and lifts the chassis (8), the lower structure portion(s) (9) and thereby the coupling means (7) to engage the corresponding coupling means of a transport unit (3, 4),
- **that** the drive unit (1) is manually controlled,
- **that** the forward driving of the together coupled units (1, 3, 4) is provided by activating a suitable control panel.
